# EUROPEAN PATENT APPLICATION

(11) **EP 4 489 523 A1**
(43) Date of publication of application: **08.01.2025**
(21) Application number: 22935848.6
(22) Date of filing: 26.04.2022
(51) Int. Cl.: H05B 6/12

(54) **INDUCTION HEATING-TYPE COOKTOP**

(30) Priority: 28.03.2022 KR 20220038186
(71) Applicant: LG Electronics Inc., Yeongdeungpo-gu Seoul 07336 (KR)
(72) Inventor: KWACK, Younghwan, Seoul 08592 (KR); SON, Seongho, Seoul 08592 (KR)
(74) Representative: Vossius & Partner Patentanwälte Rechtsanwälte mbB
(86) International application number: PCT/KR2022/005930
(87) International publication number: WO 2023/191173

(57) **Abstract**

The induction heating-type cooktop according to an embodiment of the present disclosure comprises: a top plate part on which an object to be heated is placed; a working coil which generates a magnetic field for heating the object to be heated; and an inverter part which performs actuation to have an electric current supplied to the working coil, wherein the top plate part may be made of a metallic material that can be heated by the magnetic field.

## Description

### [Technical Field]

The present disclosure relates to an induction heating type cooktop. More specifically, the present disclosure relates to an induction heating type cooktop capable of heating both magnetic materials and non-magnetic materials.

### [Background Art]

Various types of cooking equipment are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined magnitude is applied to the coil, the induction heating method generates an eddy current in the object to be heated consisting of a metal component using a magnetic field generated around the coil to heat the object to be heated itself.

Recently, most of the induction heating methods are applied to cooktops.

On the other hand, these cooktops have a limitation that the heating efficiency for non-magnetic containers is very low compared to the heating efficiency for magnetic containers. Therefore, in order to improve the problem of very low heating efficiency for non-magnetic materials (e.g., heat-resistant glass, ceramics, etc.), the cooktop includes an intermediate heating body to which eddy current is applied, and the non-magnetic material can be heated through this intermediate heating body.

However, in order for the intermediate heating body to be installed on the upper surface or lower surface of the upper plate, there is a manufacturing process difficulty in that the intermediate heating body must be coated on the upper plate and bonded.

In addition, when the intermediate heating body is installed on the upper surface of the upper plate, there is a risk of damage to the intermediate heating body due to friction with the object to be heated, and a separate protective layer may be required to prevent such damage.

In addition, when the intermediate heating body is installed on the lower surface of the upper plate, there is a disadvantage in that heat loss occurs because heat is transferred through the upper plate when heating a non-magnetic object to be heated, and thus the heating efficiency is lowered.

### [Disclosure]

### [Technical Problem]

The purpose of this present disclosure is to provide an induction heating type cooktop capable of heating an object to be heated with high heating efficiency regardless of the material.

The purpose of this present disclosure is to provide an induction heating type cooktop in which the intermediate heating body for heating a non-magnetic or non-metallic object to be heated is minimized from being damaged by the object to be heated.

The purpose of this present disclosure is to provide an induction heating type cooktop in which the heating amount of a heated area and a non-heated area are differently controlled in an upper plate formed with a structure capable of heating a non-magnetic or non-metallic object to be heated.

### [Technical Solution]

An induction heating type cooktop according to an embodiment of the present disclosure, an upper plate on which the object to be heated is placed is formed of a metal material, so that a magnetic field is coupled with the container and the upper plate to heat the magnetic container, or a magnetic field is coupled with the upper plate to heat a non-magnetic or non-metallic container.

An induction heating type cooktop according to an embodiment of the present disclosure, the upper plate formed of a metal material may have a thickness greater than a predetermined size with a low risk of damage due to friction.

An induction heating type cooktop according to an embodiment of the present disclosure, the upper plate may have a thickness greater than a predetermined size, but a slit may be formed so that the magnetic field coupling force is weakened at the lower portion.

An induction heating type cooktop according to an embodiment of the present disclosure comprises an upper plate on which an object to be heated is placed, a working coil configured to generate a magnetic field for heating the object to be heated, and an inverter that is driven so that a current is supplied to the working coil, wherein the upper plate is formed of a metal material that can be heated by the magnetic field.

At least one slit can be formed in the upper plate.

The slit can be formed on a lower surface of the upper plate.

A plurality of slits are formed and the plurality of slits have the same depth.

The slit can be formed at a position corresponding to the heated area of the upper plate.

A plurality of slits are formed and a depth of at least one of the plurality of slits is different from a depth of the other slit.

Among the plurality of slits, a depth of the slit formed in the heated area is shallower than a depth of the slit formed in an area not corresponding to the heated area.

Among the plurality of slits, a depth of the slit formed in the area that vertically overlaps with the working coil is shallower than a depth of the slit formed in the area that does not vertically overlap with the working coil.

An amount of heat generated at a top of the slit whose depth is a first value is less than an amount of heat generated at a top of the slit whose depth is a second value less than the first value.

The upper plate can be formed so that a thickness of a heated area is thicker than a thickness of a non-heated area.

A pattern can be formed to distinguish an amount of heat generated in a heated area from an amount of heat generated in the remaining area on the upper plate.

The pattern can be formed by at least one groove or slit.

The pattern can be formed by stacking a plurality of metal members.

When a plurality of heating zones are formed on the upper plate, and the slit can be formed between one heating zones and the other heating zone.

The cooktop can comprise a support member formed of a non-metallic material to support the upper plate.

### [Advantageous Effects]

According to an embodiment of the present disclosure, since the cooktop includes an upper plate made of a metal material, there is an advantage in that the cooking container can be heated regardless of the material.

According to an embodiment of the present disclosure, the cooktop has the advantage of minimizing the risk of damage due to simple friction, etc. because the upper plate has a thickness of a predetermined size or more.

According to an embodiment of the present disclosure, since the upper plate of the cooktop has a thickness greater than a predetermined size and a slit is formed at the lower portion, the magnetic field coupling force at the upper portion becomes stronger than at the lower portion, so the upper portion that comes into contact with the cooking container is concentratedly heated, so there is an advantage in that the problem of reduced heating efficiency is minimized.

### [Description of Drawings]

FIG. 1 is a perspective view illustrating an induction heating type cooktop according to an embodiment of the present disclosure.
FIG. 2 is a circuit diagram of an induction heating type cooktop according to an embodiment of the present disclosure.
FIG. 3 is a cross-sectional view illustrating an induction heating type cooktop and an object to be heated according to an embodiment of the present disclosure.
FIG. 4 is a cross-sectional view illustrating an induction heating type cooktop and an object to be heated according to another embodiment of the present disclosure.
FIG. 5 is a drawing for explaining the principle of forming an upper plate of a cooktop according to an embodiment of the present disclosure.
FIG. 6 is a drawing illustrating a slit formed in an upper plate of a cooktop according to an embodiment of the present disclosure.
FIG. 7 is a drawing illustrating a slit formed in an upper plate of a cooktop having various depths according to an embodiment of the present disclosure.
FIG. 8 is a drawing showing an upper plate having a laminated structure and having slits of various depths formed according to an embodiment of the present disclosure.
FIG. 9 is a drawing showing an upper plate having a laminated structure of a cooktop according to an embodiment of the present disclosure.
FIG. 10 is a cross-sectional view showing a heating point of a cooktop having an upper plate according to an embodiment of the present disclosure.
FIG. 11 is a cross-sectional view showing a heating point of a cooktop having an upper plate according to an embodiment of the present disclosure when controlling the phases of a plurality of working coils.

### [Best Mode]

Hereinafter, preferred embodiments according to the present disclosure will be described in detail with reference to the accompanying drawings. In the drawings, the same reference numerals are used to indicate the same or similar components.

The suffixes "module" and "portion" for components used in the following description are given or used together in consideration of ease of writing the specification, and do not have meanings or roles that are distinct from each other by themselves.

In the following description, "connection" between components includes not only direct connection of components, but also indirect connection through at least one other component, unless otherwise specified.

Hereinafter, an induction heating type cooktop and an operating method thereof according to an embodiment of the present disclosure will be described. For convenience of explanation, "induction heating type cooktop" is referred to as "cooktop".

Hereinafter, a cooktop according to an embodiment of the present disclosure will be described.

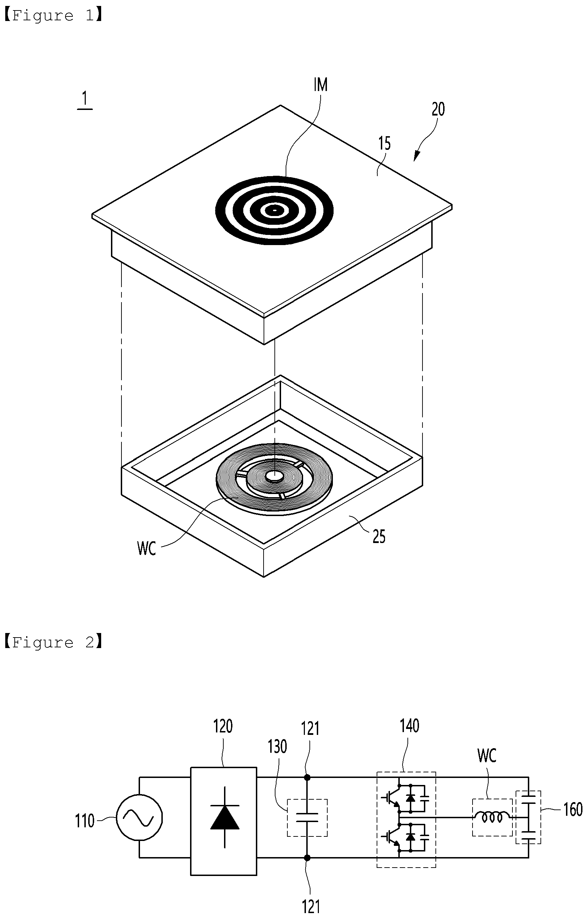

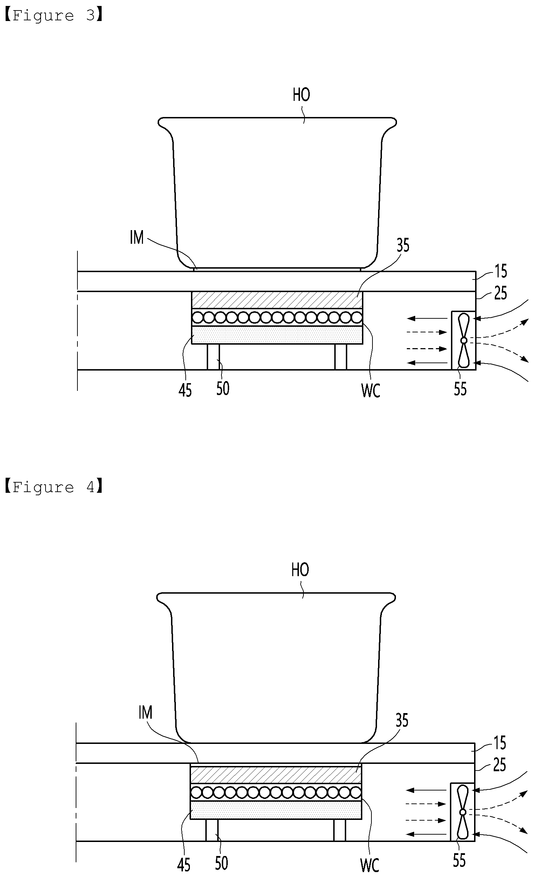

FIG. 1 is a perspective view illustrating a cooktop according to an embodiment of the present disclosure, FIG. 2 is a circuit diagram of a cooktop according to an embodiment of the present disclosure, FIG. 3 is a cross-sectional view illustrating a cooktop and an object to be heated according to an embodiment of the present disclosure. FIG. 4 is a cross-sectional view illustrating a cooktop and an object to be heated according to another embodiment of the present disclosure.

First, referring to FIG. 1, a cooktop 1 according to an embodiment of the present disclosure includes a case 25, a cover plate 20, a working coil (WC), and an intermediate heating body (IM).

The working coil WC may be installed in the case 25.

For reference, in the case 25, various devices related to driving of the working coil (for example, a power supply 110 (refer to FIG. 2) that provides alternating current (AC) power, a rectifier 120 (refer to FIG. 2) that rectifies the AC power of the power supply into direct current (DC) power, an inverter 140 (refer to FIG. 2) that converts the DC power rectified by the rectifier into resonance current through a switching operation to provides the resonance current to the working coil WC, a control module (not shown) that controls operations of various devices within the induction heating type cooktop 1.

The cover plate 20 may be coupled to an upper end of the case 25. And, an upper plate 15 on which an object to be heated (not shown) is disposed can be provided on a top surface of the cover plate 20.

Specifically, the cover plate 20 may include the upper plate 15 for disposing an object to be heated, such as a cooking container. That is, an object to be heated may be disposed on the upper plate 15.

Here, for example, the upper plate 15 may be made of a glass material (e.g., ceramics glass). However, this is only an example and is not limited thereto, and the material of the upper plate 15 may vary.

In addition, the upper plate 15 may be provided with an input interface (not shown) that receives an input from a user to transmit the input to a control module for an input interface (not shown). Of course, the input interface may be provided at a position other than the upper plate 15.

For reference, the input interface may be a module for inputting a desired heating intensity or driving time of the cooktop 1 and may be variously implemented with a physical button or a touch panel. Also, the input interface may include, for example, a power button, a lock button, a power level adjustment button (+, -), a timer adjustment button (+, -), a charging mode button, and the like. In addition, the input interface may transmit the input received from the user to the control module for the input interface (not shown), and the control module for the input interface may transmit the input to the aforementioned control module (i.e., the control module for the inverter). In addition, the aforementioned control module may control the operations of various devices (e.g., the working coils WCs) based on the input (i.e., a user input) provided from the control module for the input interface, and specific details thereof will be omitted.

Whether the working coil WC is driven and the heating intensity (i.e., thermal power) may be visually displayed on the upper plate 15 in a shape of a burner. The shape of the burner may be indicated by an indicator (not shown) constituted by a plurality of light emitting devices (e.g., LEDs) provided in the case 25.

The working coil WC may be installed inside the case 25 to heat the object to be heated.

Specifically, the working coil WC may be driven by the aforementioned control module (not shown), and when the object to be heated is disposed on the upper plate 15, the working coil WC may be driven by the control module.

In addition, the working coil WC may directly heat a magnetic object to be heated (i.e., a magnetic material) and may indirectly heat a non-magnetic object to be heated (i.e., a non-magnetic material) through an intermediate heating body IM.

In addition, the working coil WC may heat the object to be heated in an induction heating manner and may be provided to overlap the intermediate heating body IM in a longitudinal direction (i.e., a vertical direction or an upward and downward direction).

For reference, although the structure in which one working coil WC is installed in the case 25 is illustrated in FIG. 1, the embodiment is not limited thereto. That is, one or more working coils WC may be installed in the case 25. The intermediate heating body IM may be installed to correspond to the working coil WC. The number of intermediate heating bodies IM and the number of working coils WC may be the same.

The intermediate heating body IM may be installed on the upper plate 15. The intermediate heating body IM may be coated on the upper plate 15 to heat the non-magnetic material among the objects to be heated. The intermediate heating body IM may be inductively heated by the working coil WC.

The intermediate heating body IM may be disposed on a top surface or a bottom surface of the upper plate 15. For example, as illustrated in FIG. 2, the intermediate heating body IM may be installed on the top surface of the upper plate 15, or as illustrated in FIG. 3, the intermediate heating body IM may be installed on the bottom surface of the upper plate 15.

The intermediate heating body IM may be provided to overlap the working coil WC in the longitudinal direction (i.e., the vertical direction or the upward and downward direction). Thus, the heating of the object to be heated may be possible regardless of the arrangement positions and types of the objects to be heated.

Also, the intermediate heating body IM may have at least one of magnetic or non-magnetic properties (i.e., a magnetic property, a non-magnetic property, or both the magnetic and non-magnetic properties).

In addition, the intermediate heating body IM may be made of, for example, a conductive material (e.g., aluminum), and as illustrated in the drawings, a plurality of rings having different diameters may be installed on the upper plate 15 in a repeated shape, but is not limited thereto. That is, the intermediate heating body IM may be made of a material other than a conductive material. Also, the intermediate heating body IM may be provided in a shape other than the shape in which the plurality of rings having different diameters are repeated.

For reference, although a single intermediate heating body IM is illustrated in FIGS. 3 and 4, the embodiment is not limited thereto. That is, a plurality of intermediate heating bodies may be installed, but for convenience of description, a single intermediate heating body IM may be installed as an example.

FIG. 2 is a circuit diagram of a cooktop according to an embodiment of the present disclosure.

Referring to FIG. 2, the induction heating type cooktop may include at least some or all of a power supply 110, a rectifier 120, a DC link capacitor 130, an inverter 140, a working coil WC, and a resonance capacitor 160.

The power supply 110 may receive external power. The power that the power supply 110 receives from the outside may be Alternation Current (AC) power.

The power supply 110 may supply AC voltage to the rectifier 120.

The rectifier 120 is an electrical device for converting AC into DC. The rectifier 120 converts the AC voltage supplied through the power supply 110 into a DC voltage. The rectifier 120 may supply the converted voltage to DC both terminals 121.

An output terminal of the rectifier 120 may be connected to DC both terminals 121. The DC both terminals 121 output through the rectifier 120 may be referred to as a DC link. The voltage measured across the DC both terminals 121 is referred to as the DC link voltage.

The DC link capacitor 130 serves as a buffer between the power supply 110 and the inverter 140. Specifically, the DC link capacitor 130 is used to maintain the DC link voltage converted through the rectifier 120 and supply the DC link voltage to the inverter 140.

The inverter 140 serves to switch a voltage applied to the working coil WC so that a high-frequency current flows through the working coil WC. The inverter 140 may apply current to the working coil WC. The inverter 140 may include a relay, a semiconductor switch, or the like that turns on or off the working coil WC. For example, the inverter 140 may include a semiconductor switch, and the semiconductor switch may be an Insulated Gate Bipolar Transistor (IGBT) or a Wide Band Gab (WBG) element, but this is only exemplary and is not limited thereto. Meanwhile, the WBG element may be SiC (Silicon Carbide), GaN (Gallium Nitride), or the like. The inverter 140 causes a high-frequency current to flow through the working coil WC by driving the semi-conductor switch, and thus a high-frequency magnetic field is formed in the working coil WC.

The working coil WC may include at least one working coil WC generating a magnetic field for heating the object to be heated. Current may or may not flow through the working coil WC depending on whether the switching element is driven. When a current flows through the working coil WC, a magnetic field is generated. The working coil WC may heat the cooktop by generating a magnetic field as current flows.

One side of the working coil WC is connected to the connection point of the switching element of the inverter 140, and the other side thereof is connected to the resonant capacitor 160.

The driving of the switching element is performed by a driver (not shown), and is controlled at a switching time output from the driver to apply a high-frequency voltage to the working coil WC while the switching elements alternately operate with each other. In addition, since the on/off time of the switching element applied from the driver (not shown) is controlled in a gradually compensated manner, the voltage supplied to the working coil WC changes from a low voltage to a high voltage.

The resonance capacitor 160 may resonate with the working coil WC.

The resonance capacitor 160 may be a component for serving as a shock absorber. The resonance capacitor 160 affects the energy loss during the turn-off time by adjusting the saturation voltage rise rate during the turn-off of the switching element.

Next, referring to FIGS. 3 and 4, the induction heating type cooktop 1 according to an embodiment of the present disclosure may further include at least some or all of an insulating material 35, a shielding plate 45, a support member 50, and a cooling fan 55.

The insulating material 35 may be provided between the upper plate 15 and the working coil WC.

Specifically, the insulating material 35 may be mounted under the upper plate 15, and the working coil WC may be disposed below the insulating material 35.

The insulating material 35 may prevent heat generated while the intermediate heating body IM or the object to be is heated HO heated by the driving of the working coil WC from being transmitted to the working coil WC.

That is, when the intermediate heating body IM or the object to be heated HO is heated by electromagnetic induction of the working coil WC, the heat of the intermediate heating body IM or the object to be heated HO may be transferred to the upper plate 15, and then, the heat of the upper plate 15 may be transferred to the working coil WC again to damage the working coil WC.

The insulating material 35 may block the heat transferred to the working coil WC as described above to prevent the working coil WC from being damaged by the heat, and furthermore, prevent heating performance of the working coil WC from being deteriorated.

For reference, although it is not an essential component, a spacer (not shown) may be installed between the working coil WC and the insulating material 35.

Specifically, the spacer may be inserted between the working coil WC and the insulating material 35 so that the working coil WC and the insulating material 35 are not in directly contact with each other. Thus, the spacer (not shown) may prevent the heat generated while the intermediate heating body IM or the object to be heated HO is heated by the driving of the working coil WC from being transmitted to the working coil WC through the insulating material 35.

That is, since the spacer (not shown) partially shares the role of the insulating material 35, a thickness of the insulating material 35 may be minimized, and thus, a gap (or an interval) between the object to be heated HO and the working coil WC may be minimized.

In addition, the spacer (not shown) may be provided in plurality, and the plurality of spacers may be disposed to be spaced apart from each other between the working coil WC and the insulating material 35. Thus, air suctioned into the case 25 by a cooling fan 55 to be described later may be guided to the working coil WC by the spacers (not shown).

That is, the spacers (not shown) may guide the air introduced into the case 25 by the cooling fan 55 so as to be properly transferred to the working coil WC, thereby improving cooling efficiency of the working coil WC.

The shielding plate 45 may be mounted under the working coil WC to block magnetic fields generated downward when the working coil WC is driven.

Specifically, the shielding plate 45 may block the magnetic fields generated downward when the working coil WC is driven and may be supported upward by the support member 50.

The support member 50 may be installed between a bottom surface of the shielding plate 45 and the lower plate of the case 25 to support the shielding plate 45 upward.

Specifically, the support member 50 may support the shielding plate 45 upward to indirectly support the insulating material 35 and the working coil WC upward, and thus, the insulating material 35 may be in close contact with the upper plate 15.

As a result, the gap between the working coil WC and the object to be heated HO may be constantly maintained.

For reference, the support member 50 may include, for example, an elastic body (e.g., a spring) for supporting the shielding plate 45 upward, but is not limited thereto. In addition, since the support member 50 is not an essential component, it may be omitted from the induction heating type cooktop 1.

The cooling fan 55 may be installed inside the case 25 to cool the working coil WC.

Specifically, the cooling fan 55 may be controlled to be driven by the above-described control module and may be installed on a sidewall of the case 25. The cooling fan 55 may be installed at a position other than the sidewall of the case 25, but in the present disclosure, for convenience of explanation, the structure in which the cooling fan 55 is installed on the sidewall of the case 25 will be described as an example.

In addition, as illustrated in FIGS. 3 and 4, the cooling fan 55 may suck up air from the outside of the case 25 to deliver the air to the working coil WC or may suck up air (particularly, heated air) inside the case 25 to discharge the air outside of the case 25.

As a result, efficient cooling of the components (in particular, the working coil WC) inside the case 25 is possible.

Also, as described above, the air outside the case 25 delivered to the working coil WC by the cooling fan 55 may be guided to the working coil WC by the spacers. Thus, the direct and efficient cooling of the working coil WC is possible to improve durability of the working coil WC (i.e., improvement in durability due to prevention of thermal damage) .

The intermediate heating body IM may be a material having a resistance value that is capable of being heated by the working coil WC.

A thickness of the intermediate heating body IM may be inversely proportional to the resistance value (i.e., a surface resistance value) of the intermediate heating body IM. That is, as the thickness of the intermediate heating body IM decreases, the resistance value (i.e., surface resistance value) of the intermediate heating body IM increases. Thus, the intermediate heating element IM can be thinly installed on the upper plate 15 and thus its characteristics can be changed into a heatable load.

For reference, the intermediate heating body IM according to the embodiment of FIG. 2 to FIG. 3 may have a thickness of, for example, about 0.1µm to about 1,000um, but is not limited thereto.

The intermediate heating body IM having such characteristics may be present to heat the non-magnetic material, and thus, impedance characteristics between the intermediate heating body IM and the object to be heated HO may be changed according to whether the object to be heated HO disposed on the upper plate 15 is a magnetic material or non-magnetic material.

The case in which the object to be heated is the magnetic material will be described as follows.

A resistance component (R1) and an inductor component (L1) of the object to be heated HO may form an equivalent circuit with a resistance component (R2) and an inductor component (L2) of the intermediate heating body IM. In this case, the impedance (i.e., impedance measured by R1 and L1) of the object to be heated HO, which has the magnetism may be less than the impedance of the intermediate heating body IM (i.e., the impedance measured by R2 and L2). Thus, magnitude of the eddy current I1 applied to the magnetic object to be heated may be greater than magnitude of the eddy current I2 applied to the intermediate heating body IM. Thus, most of the eddy current generated by the working coil WC may be applied to the object to be heated HO, and thus, the object to be heated HO may be heated. That is, when the object to be heated HO is the magnetic material, the above-described equivalent circuit may be formed, and thus, most of the eddy current may be applied to the object to be heated HO. As a result, the working coil WC may directly heat the object to be heated HO.

Next, the case in which the object to be heated is the non-magnetic material will be described as follows.

When the object to be heated HO, which does not have the magnetism, is disposed on the upper plate 15, and the working coil WC is driven, there is no impedance in the non-magnetic object to be heated HO, and the intermediate heating body IM may have an impedance. That is, the resistance component R and the inductor component L may exist only in the intermediate heating body IM. Therefore, when the non-magnetic object to be heated HO is disposed on the upper plate 15 and the working coil WC is driven, the resistance component R and the inductor component L of the intermediate heating body IM may form an equivalent circuit. Thus, eddy current I may be applied only to the intermediate heating body IM, and eddy current may not be applied to the object to be heated HO, which does not have magnetism. More specifically, the eddy current I generated by the working coil WC may be applied only to the intermediate heating body IM, and thus, the intermediate heating body IM may be heated. That is, when the object to be heated HO is the non-magnetic material, the eddy current I may be applied to the intermediate heating body IM to heat the intermediate heating body IM, and the object to be heated HO, which does not have magnetism, may be indirectly heated by the intermediate heating body IM heated by the working coil WC. In this case, the intermediate heating body IM may be a main heating source.

In summary, the object to be heated HO may be directly or indirectly heated by a single heat source, which is called the working coil WC, regardless of whether the object to be heated HO is the magnetic material or the non-magnetic material. That is, when the object to be heated HO is the magnetic material, the working coil WC may directly heat the object to be heated HO, and when the object to be heated HO is the non-magnetic material, the intermediate heating body IM heated by the working coil WC may indirectly heat the object to be heated HO.

However, in order for the intermediate heating body IM to be installed on the upper or lower surface of the upper plate 15, there is a manufacturing process difficulty in that the intermediate heating body IM must be coated and bonded to the upper plate 15.

In addition, when the intermediate heating body IM is installed on the upper surface of the upper plate 15, there is a risk of damage to the intermediate heating body IM due to friction with the object to be heated HO, and a separate protective layer (not shown) may be required to prevent such damage.

In addition, when the intermediate heating body IM is installed on the lower surface of the upper plate 15, since heat is transferred through the upper plate 15 when heating the non-magnetic object to be heated HO, so there is a disadvantage in that heat loss occurs and heating efficiency is lowered accordingly.

In order to compensate for the disadvantages that occur when the intermediate heating body IM is installed on one surface of the upper plate 15, the upper plate 15 itself can be designed with a material that can be heated by the working coil WC. That is, cooktop 1 can be formed of a material that allows the upper plate 15 itself to be heated by the working coil WC so that all objects to be heated HO can be heated regardless of the material. The cooktop 1 can be formed of a material that allows the upper plate 15 itself to be heated so that all objects to be heated HO, whether magnetic, non-magnetic or non-metallic, can be heated.

As described above, the upper plate 15 can be formed of a metal material that can be heated by a magnetic field generated by the working coil WC. A current induced by the magnetic field generated by the working coil WC can flow through the upper plate 15 of the metal material, and accordingly, the upper plate 15 itself can be heated to generate heat.

If a magnetic object to be heated HO is placed on the upper plate 15, the magnetic field generated from the working coil WC can be coupled with each of the upper plate 15 and the object to be heated HO, and in this case, the object to be heated HO can be directly heated by the working coil WC and indirectly heated by the upper plate 15.

Meanwhile, if a non-magnetic or non-metallic object to be heated HO is placed on the upper plate 15, the magnetic field generated from the working coil WC can be coupled with the upper plate 15, and in this case, the object to be heated HO can be heated through the heat of the upper plate 15 heated by the working coil WC.

Meanwhile, the upper plate 15 can have various structures so that a portion in contact with the object to be heated HO is intensively heated.

According to one embodiment, the upper plate 15 can have a hexahedral shape made entirely of a metal material. At this time, the thickness of the upper plate 15 may be a predetermined thickness or more so as to support the object to be heated HO. In this case, the shape of the upper plate 15 is simple, so there is an advantage of easy manufacturing.

Meanwhile, when the cooktop 1 includes the upper plate 15 having a thickness of a predetermined size or more, the magnetic field generated from the working coil WC reaches the lower part of the upper plate 15 before the upper part, so that more magnetic fields are coupled to the lower part than the upper part, and thus the heating efficiency may be reduced. Accordingly, a structure for reducing the loop size of the induced current formed at the lower part of the upper plate 15 may be proposed.

According to the second and third embodiments described below, the upper plate 15 may be designed so that the loop size of the induced current formed at the lower part is smaller than the loop size of the induced current formed at the upper part.

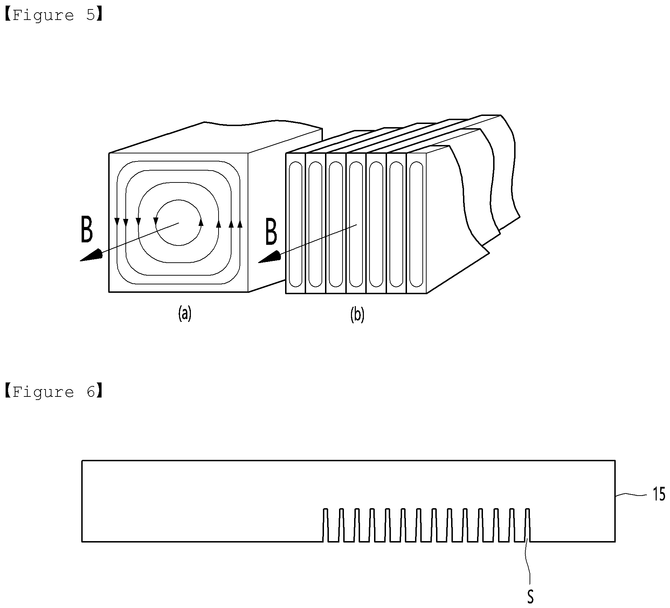

FIG. 5 is a drawing for explaining the principle of forming the upper plate of the cooktop according to the embodiment of the present disclosure.

FIG. 5 illustrates two types of transformer cores. The transformer core illustrated in FIG. 5 (a) and the transformer core illustrated in FIG. 5 (b) have the same total volume, but in FIG. 5 (a) it is formed as one core, and in FIG. 5 (b) it can be formed in a form in which multiple cores are laminated.

In the case where one core forms a transformer core as a whole, as in FIG. 5 (a), the coupling force with the magnetic field is strong because the loop size is large, whereas in the case where multiple cores are laminated to form a transformer core as in FIG. 5 (b), the coupling force with the magnetic field is weak because the loop size is small, so that the loss due to the induced current is reduced.

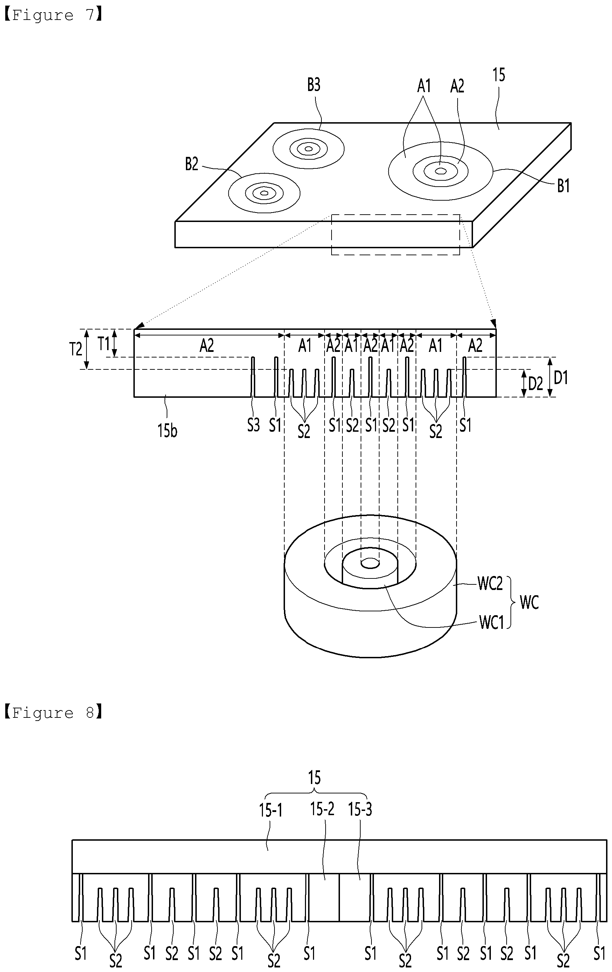

In this way, the principle that the coupling force with the magnetic field varies depending on the size of the loop can be applied to the upper plate 15 according to the embodiment of the present disclosure, and the upper plate 15 according to this will be described with reference to FIGS. 6 and 7.

FIG. 6 is a drawing showing a slit formed in an upper plate of a cooktop according to an embodiment of the present disclosure.

According to one embodiment, as shown in FIG. 6, at least one slit S may be formed in the upper plate 15. In particular, at least one slit S may be formed in the lower portion of the upper plate 15. The slit S may be formed on the lower surface of the upper plate 15.

In this case, the current induced by the magnetic field is cut off by the slit S in the lower portion of the upper plate 15, and thus heat generation may be suppressed. That is, the slit S cuts off the loop of the current induced by the magnetic field, and thus the loop size becomes smaller, so that the coupling force with the magnetic field becomes weaker.

In summary, the size of the current loop formed at the lower part of the upper plate 15 where the slit S is formed is smaller than the size of the current loop formed at the upper part of the upper plate 15 where the slit S is not formed, and accordingly, the magnetic field generated from the working coil WC has a stronger coupling force at the upper part than at the lower part of the upper plate 15. Accordingly, the amount of heat generated at the upper part of the upper plate 15 is greater than the amount of heat generated at the lower part of the upper plate 15, and accordingly, the heat transfer efficiency from the upper plate 15 to the object to be heated HO can be increased.

In the case of the embodiment illustrated in FIG. 6, there may be a plurality of slits S, and the depths of the plurality of slits S may be the same.

In addition, according to one embodiment, the spacing between the slits S may be constant.

According to another embodiment, the spacing between the slits S may not be constant. The spacing between slits S can vary depending on the current loop formed in the upper plate 15.

Meanwhile, as described later in FIG. 7, when the upper plate 15 is divided into a heated area and a non-heated area, slits S can be formed only at a location corresponding to the heated area.

Specifically, since the magnetic field coupling force of the upper plate 15 is weak in the area where slits S are formed, the magnetic field can be mainly coupled above the slits S. Therefore, among the upper surface areas of upper plate 15, heat may be generated mainly in the area where slit S is formed below. In the area where slits S are not formed below among the upper surface areas of upper plate 15, many magnetic fields have already been coupled at the bottom, so the amount of heat generated at the top can be reduced. Therefore, slits S can be formed at a location corresponding to the heated area of the upper plate 15.

Meanwhile, according to another embodiment of the present disclosure, the plurality of slits S may have different depths.

FIG. 7 is a drawing showing an upper plate in which slits of various depths are formed according to an embodiment of the present disclosure.

The depth of at least one slit S1 and S3 of the plurality of slits S1 S2 and S3 formed in the upper plate 15 may be different from the depth of the other slit S2. In this way, the slits S1 S2 and S3 of different depths may form a pattern in the upper plate 15. The pattern may be formed by at least one groove (not shown) or slits S1 S2 and S3. The pattern may be diverse. For example, a pattern that distinguishes the heat generation amount of the heated area from the heat generation amount of the remaining area can be formed on the upper part 15, as shown in FIG. 7. However, this is only an example, and various patterns can be formed on the upper plate 15 by at least one groove (not shown) or at least one slit S1 S2 and S3.

Meanwhile, heating zones B1 B2 and B3 may mean areas where the cooking container HO can be heated.

Meanwhile, each of the heating zones B1 B2 and B3 may be divided into heated area A1 and non-heated area A2. The heated area A1 may mean an area where the object to be heated HO is intensively heated by a magnetic field generated from the working coil WC. Meanwhile, the remaining area A2 may mean a non-heated area, excluding the heated area A1, on the upper surface of the upper plate 15.

Meanwhile, only the slits S1 S2 and S3 formed under the first heating zone B1 among the first to third heating zones B1 B2 and B3 are enlarged in FIG. 7. The structures of the heated area A1 and the non-heated area A2 are described in detail using the first heating zone B1 as an example.

The heated area A1 can be formed by a plurality of rings. For example, a plurality of rings of various sizes can form the heated area A1 in a form in which smaller rings are arranged on the inside. In this case, the working coil WC can also be composed of a plurality of ring-shaped working coils WC1 and WC2. That is, the first ring-shaped working coil WC1 can be arranged on the inside, and the second working coil WC2 having a center hole larger than that of the first working coil WC1 can be arranged on the outside. That is, the heated area A1 can be in the form of a 2-Ring. In this way, slits of various depths can be formed in the upper plate 15, which is composed of the heated area A1 and the remaining area (A2).

For convenience of explanation, the slit formed in the non-heated area A2 is called the first slit S1, the slit formed in the heated area A1 is called the second slit S2, and the slit for distinguishing the heated zones B1 B2 and B3 is called the third slit S3, but this is not limited thereto.

Referring to the example of Fig. 7, the depth D1 of the first slit S1 may be a first value, and the depth D2 of the second slit S2 may be a second value smaller than the first value.

The depth D2 of the slit S2 formed at a position corresponding to the heated area A1 among the plurality of slits S1 and S2 may be shallower than the depth D1 of the slit S1 formed in an area A2 that does not correspond to the heated area. In other words, the depth D2 of the slit S2 formed at a position corresponding to the heated area A1 may be shallower than the depth D1 of the slit S1 formed in the remaining area A2. In other words, the depth D2 of the slit S2 formed in an area A1 that vertically overlaps the working coil WC1 and WC2 among the plurality of slits S1 and S2 may be shallower than the depth D1 of the slit S1 formed in an area A2 that does not vertically overlap the working coil WC1 and WC2.

The thickness of the upper plate 15 may vary depending on the slits S1, S2, and S3. The upper plate 15 may be formed such that the thickness of the heated area A1 is thicker than the thickness of the non-heated area A2. Specifically, the upper plate 15 may have a first thickness T1 in the area where the first slit S1 is formed, and a second thickness T2 in the area where the second slit S2 is formed. Since the depth D1 of the first slit S1 is deeper than the depth of the second slit S2, the first thickness T1 may be shallower than the second thickness T2.

That is, the thickness T2 of the heated area A1 where the second slit S2 is formed may be thicker than the thickness T1 of the remaining area A2 where the first slit S1 is formed. Accordingly, the amount of heat generated in the upper part of the first slit S1, where the depth D1 is the first value, may be less than the amount of heat generated in the upper part of the second slit S2, where the depth D2 is the second value smaller than the first value.

Accordingly, the upper plate 15 is heated more intensively at the upper part than the lower part by slits S1 and S2, and since many current loops larger in size are formed in the heated area A1 than in the non-heated area A2, the heated area A1 can be heated more intensively than the non-heated area A2.

That is, the upper plate 15 can be formed so that the thickness of the heated area is thicker than the thickness of the non-heated area.

In this way, according to one embodiment of the present disclosure, by forming slits S1 and S2 of various depths in the upper plate 15, the amount of heat generated by the upper plate can be controlled so that the heated area is heated more intensively than the non-heated area.

In addition, the present disclosure is not limited to the pattern illustrated in FIG. 7, and the heated area can be formed in various shapes by forming the slits with different depths, intervals, etc.

Meanwhile, a third slit S3 may be further formed in the upper plate 15 to distinguish one heating zone from another heating zone. Specifically, when a plurality of heating zones B1 B2 and B3 are formed in the upper plate 15, a third slit S3 may be formed between a heating zone and another heating zone. The depth of the third slit S3 may be the same as or deeper than the depth of the first slit S1.

Meanwhile, according to another embodiment of the present disclosure, as described in FIG. 7, a heated area may be distinguished from a non-heated area through a structure in which heating members are laminated together with slits S1 and S3 of various depths. That is, a pattern that distinguishes the amount of heat generated in the heated area from the amount of heat generated in the remaining area may be formed by laminating a plurality of metal members.

FIG. 8 is a drawing showing an upper plate having a laminated structure and in which slits of various depths are formed according to an embodiment of the present disclosure.

Referring to the example of FIG. 8, upper plate 15 may be composed of a plurality of heating members. For example, the upper plate 15 may be composed of first to third heating members 15-1 15-2 and 15-3. The first heating member 15-1 may form the upper surface of the upper plate 15, and the second and third heating members 15-2 and 15-3 may be arranged to contact the lower surface of the first heating member 15-1. At this time, the first to third heating members 15-1 15-2 and 15-3 may all be formed of a metal material.

In order for the upper part of the upper plate 15 to be heated more intensively than the lower part, slits S1 and S2 may be formed in the second and third heating members 15-2 and 15-3. The slits S1 and S2 may not be formed in the first heating member 15-1. In addition, the second heating member 15-2 and the third heating member 15-3 may be divided according to heating zones B1 B2 and B3. For example, the second heating member 15-2 may correspond to the second heating zone B2 position, and the third heating member 15-3 may correspond to the third heating zone B3 position.

In this way, the upper plate 15 can distinguish the heated area from the non-heated area through the laminated structure of the heating member 15-2 and 15-3 in which slits S1 S2 and S3 are formed and the heating member 15-1 in which slits S1 S2 and S3 are not formed.

On the other hand, when the thickness of the upper plate 15 is less than a predetermined size, the entire upper plate 15 can be uniformly heated, and thus the problem of the lower part being heated more than the upper part can be minimized. Therefore, however, the upper plate 15 may not need slit, and thus there is an advantage of simplifying the manufacturing process. However, since the thickness of the upper plate 15 is very thin, there may be a problem of not being able to support the object to be heated HO, and therefore the upper plate 15 may further include a separate support member 15-5. The support member 15-5 may be formed of a non-metallic material and may support the upper plate 15.

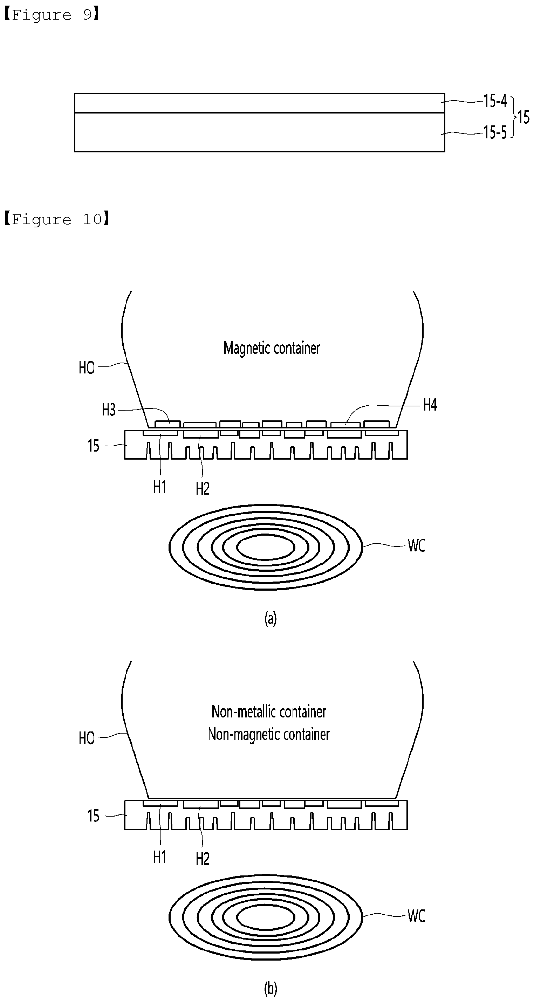

FIG. 9 is a drawing showing an upper plate having a laminated structure of a cooktop according to an embodiment of the present disclosure.

Referring to the example of FIG. 9, the upper plate 15 may be formed of a first heating member 15-4 made of a metal material and a second heating member 15-5 made of a non-metallic material. The first heating member 15-4 and the second heating member 15-5 can be arranged to be stacked in the vertical direction. That is, the first heating member 15-4 can be arranged to form the upper surface of the upper plate 15, and the second heating member 15-5 can be arranged to be in contact with the lower surface of the first heating member 15-4. The thickness of the first heating member 15-4 can be less than a predetermined size. In this case, the entire upper plate 15 can be uniformly heated.

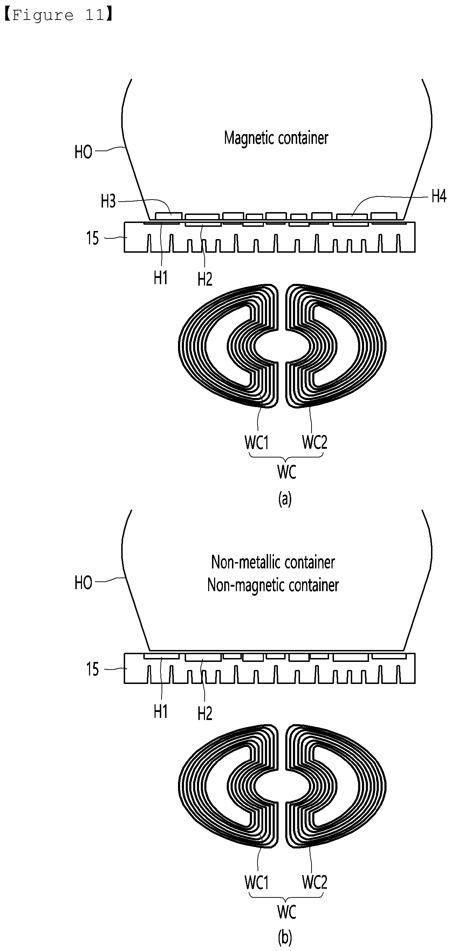

The cooktop 10 of the present disclosure may include an upper plate 15 according to various embodiments described above. Next, with reference to FIGS. 10 and 11, a heating point heated by a working coil WC in a cooktop 10 including an upper plate 15 according to an embodiment of the present disclosure will be described. In particular, FIGS. 10 and 11 are assumed to include an upper plate 15 according to an embodiment described in FIG. 7, but this is only for convenience of explanation and is not limited thereto.

FIG. 10 is a cross-sectional view illustrating a heating point of a cooktop having an upper plate according to an embodiment of the present disclosure.

The heating points H1 H2 H3 and H4 illustrated in FIG. 10 may represent an area that is intensively coupled with a magnetic field generated from the working coil WC. That is, the heating points H1 H2 H3 and H4 represent areas where a lot of coupling with the magnetic field occurs, and it does not mean that magnetic field coupling does not occur at locations not indicated as heating points H1 H2 H3 and H4.

Fig. 10 (a) illustrates the heating points H1 H2 H3 and H4 when the cooktop 10 heats the magnetic container. Referring to Fig. 10 (a), when heating the magnetic container, it can be confirmed that the upper plate 15 is also coupled with the magnetic field, and the lower part of the magnetic container is also coupled with the magnetic field. In particular, in the case of the heating points H1 and H2 illustrated in the upper plate 15, it can be confirmed that they are divided into a first heating point H1 and a second heating point H2, and that the first heating point H1 is illustrated in an area where a deep slit is formed (non-heated area), and the second heating point H2 is illustrated in an area where a shallow slit is formed (heated area). In addition, at this time, the area of the first heating point H1 is narrower than the area of the second heating point H2. That is, it can be confirmed that the magnetic field coupling force in the area corresponding to the second heating point H2 (heated area) is stronger than the magnetic field coupling force in the area corresponding to the first heating point H1 (non-heated area). That is, it can be confirmed that concentrated heating occurs in the heated area of the upper plate 15.

Meanwhile, in the case of the heating point H3 and H4 illustrated at the bottom of the magnetic container, it can be confirmed that it is divided into the third heating point H3 and the fourth heating point H4, and the third heating point H3 is illustrated at a position corresponding to the first heating point H1, and the fourth heating point H4 is illustrated at a position corresponding to the second heating point H2. This is because the magnetic container is coupled with a magnetic field throughout the entire bottom, but the magnetic field is coupled more intensively at the second heating point H2 more than at the first heating point H1, and thus the magnetic field reaching the third heating point H3 is greater than that at the fourth heating point H4.

In Fig. 10 (b), the heating points H1 and H2 when the cooktop 10 heats a non-metallic or non-magnetic container are illustrated. Referring to Fig. 10 (b), it can be confirmed that heating points H1 and H2 are formed only on the upper plate 15, and when heating a non-metallic container or a non-magnetic container, magnetic field coupling occurs only on the upper plate 15. Of course, some magnetic fields may heat the non-metallic container.

And, in the case of the heating points H1 and H2 shown on the upper plate 15, it can be confirmed that they are divided into the first heating point H1 and the second heating point H2, and the first heating point H1 is shown in the area where a deep slit is formed (non-heated area), and the second heating point H2 is shown in the area where a shallow slit is formed (heated area). And, at this time, the area of the first heating point H1 is narrower than the area of the second heating point H2. That is, it can be confirmed that the magnetic field coupling force in the area corresponding to the second heating point H2 (heated area) is stronger than the magnetic field coupling force in the area corresponding to the first heating point H1 (non-heated area). That is, it can be confirmed that the upper plate 15 is intensively heated in the heated area.

Meanwhile, as shown in FIG. 10 (a), when heating a magnetic container, the magnetic field is coupled not only to the magnetic container but also to the upper plate 15. In this way, if some of the magnetic field is not directly coupled to the magnetic container but is coupled to the upper plate 15, the container is indirectly heated, which causes heat loss. Therefore, in the present disclosure, when heating a magnetic container, a plurality of working coils are provided, and the phases of the plurality of working coils can be controlled so that the magnetic field is intensively coupled to the magnetic container rather than the upper plate 15.

FIG. 11 is a cross-sectional view illustrating a heating point when a cooktop having an upper plate controls the phases of a plurality of working coils according to an embodiment of the present disclosure.

A cooktop 10 according to an embodiment of the present disclosure may include an upper plate 15 having a slit formed therein or having a laminated structure as described above, and may include a plurality of working coils WC1 and WC2. As in the example of Fig. 11, the working coil WC may be composed of the first working coil WC1 arranged on the left and the second working coil WC2 arranged on the right.

As shown in (a) of Fig. 11, when the cooktop 10 heats the magnetic container, the direction of the current flowing through the first working coil WC1 and the second working coil WC2 may be controlled differently. That is, the current may flow clockwise through the first working coil WC1 and the current may flow counterclockwise through the second working coil WC2. Or, conversely, the current may flow counterclockwise through the first working coil WC1 and the current may flow clockwise through the second working coil WC2. That is, the phase difference between the current flowing through the first working coil WC1 and the current flowing through the second working coil WC2 may be 180 degrees.

In this case, since the magnetic fields of the areas where the currents face each other are canceled, the magnetic fields generated from the first and second working coils WC1 and WC2 can be concentrated at the second heating point H2 rather than the first heating point H1. Therefore, the magnetic field coupled at the first heating point H1 is not only less than the magnetic field coupled at the second heating point H2, but in particular, the magnetic field coupling force at the first heating point H1 can be very weak. Therefore, the magnetic field coupled with the magnetic container can be increased compared to the case described in Fig. 10 (a).

As shown in Fig. 11 (b), when the cooktop 10 heats a non-metallic container or a non-magnetic container, the direction of the current flowing through the first working coil WC1 and the second working coil WC2 can be controlled to be the same. That is, the current can flow clockwise in each of the first working coil WC1 and the second working coil WC2. Or, conversely, the current may flow counterclockwise in each of the first working coil WC1 and the second working coil WC2. That is, the phase difference between the current flowing in the first working coil WC1 and the current flowing in the second working coil WC2 may be 0 degrees.

In this case, since the magnetic fields of the areas where the currents face each other are canceled, the magnetic fields generated in the first and second working coils WC1 and WC2 may be concentrated at the first heating point H1 rather than the second heating point H2. Accordingly, since the magnetic field is concentrated at the first heating point H1, the magnetic field coupling force may become relatively strong even at the first heating point H1. Accordingly, compared to the case described in Fig. 10 (b), the magnetic field coupled with the upper plate 15 may be greater.

The above description is merely an example of the technical idea of the present disclosure, and those with ordinary knowledge in the technical field to which the present disclosure belongs may make various modifications and variations without departing from the essential characteristics of the present disclosure.

Therefore, the embodiments disclosed in the present disclosure are not intended to limit the technical idea of the present disclosure but to explain it, and the scope of the technical idea of the present disclosure is not limited by these embodiments.

The protection scope of the present disclosure should be interpreted by the claims below, and all technical ideas within the equivalent scope should be interpreted as being included in the scope of the rights of the present disclosure.

## Claims

1. An induction heating type cooktop, comprising:
an upper plate on which an object to be heated is placed;
a working coil configured to generate a magnetic field for heating the object to be heated; and
an inverter that is driven so that a current is supplied to the working coil,
wherein the upper plate is formed of a metal material that can be heated by the magnetic field.

2. The induction heating type cooktop of claim 1, wherein at least one slit is formed in the upper plate.

3. The induction heating type cooktop of claim 2, wherein the slit is formed on a lower surface of the upper plate.

4. The induction heating type cooktop of claim 2, wherein a plurality of slits are formed and the plurality of slits have the same depth.

5. The induction heating type cooktop of claim 4, wherein the slit is formed at a position corresponding to the heated area of the upper plate.

6. The induction heating type cooktop of claim 2, wherein a plurality of slits are formed and a depth of at least one of the plurality of slits is different from a depth of the other slit.

7. The induction heating type cooktop of claim 6, wherein among the plurality of slits, a depth of the slit formed in the heated area is shallower than a depth of the slit formed in an area not corresponding to the heated area.

8. The induction heating type cooktop of claim 6, wherein among the plurality of slits, a depth of the slit formed in the area that vertically overlaps with the working coil is shallower than a depth of the slit formed in the area that does not vertically overlap with the working coil.

9. The induction heating type cooktop of claim 6, wherein an amount of heat generated at a top of the slit whose depth is a first value is less than an amount of heat generated at a top of the slit whose depth is a second value less than the first value.

10. The induction heating type cooktop of claim 1, wherein the upper plate is formed so that a thickness of a heated area is thicker than a thickness of a non-heated area.

11. The induction heating type cooktop of claim 1, wherein a pattern is formed to distinguish an amount of heat generated in a heated area from an amount of heat generated in the remaining area on the upper plate.

12. The induction heating type cooktop of claim 11, wherein the pattern is formed by at least one groove or slit.

13. The induction heating type cooktop of claim 11, wherein the pattern is formed by stacking a plurality of metal members.

14. The induction heating type cooktop of claim 1, wherein when a plurality of heating zones are formed on the upper plate, the slit is formed between one heating zones and the other heating zone.

15. The induction heating type cooktop of claim 1, further comprising a support member formed of a non-metallic material to support the upper plate.
